# EUROPEAN PATENT SPECIFICATION

(11) **EP 4 010 445 B1**
(45) Date of publication and mention of the grant of the patent: **15.05.2024**
(21) Application number: 20751568.5
(22) Date of filing: 10.08.2020
(51) Int. Cl.: C09J 123/02, C08L 23/06, C08K 5/5357, B32B 27/32

(54) **AN ADHESIVE COMPOSITION AND USE THEREOF FOR BONDING OF PLASTIC FOAM PLATES**
KLEBSTOFFZUSAMMENSETZUNG UND DEREN VERWENDUNG ZUM VERBINDEN VON KUNSTSTOFFSCHAUMPLATTEN
COMPOSITION ADHÉSIVE ET SON UTILISATION POUR LE COLLAGE DE PLAQUES EN MOUSSE PLASTIQUE

(30) Priority: 09.08.2019 EP 19191005
(43) Date of publication of application: 15.06.2022
(73) Proprietor: Sika Technology AG, 6340 Baar (CH)
(72) Inventor: FUNKE, Björn, 21339 Lüneburg (DE); GÜNTHER, Andreas, 21614 Buxtehude (DE); JANKE, Doreen, 25486 Alveslohe (DE)
(74) Representative: Sika Patent Attorneys
(86) International application number: PCT/EP2020/072349
(87) International publication number: WO 2021/028373

(56) References cited:
- EP-A1- 1 896 537
- EP-A1- 3 498 798
- WO-A1-2012/060895
- WO-A1-2019/241473
- US-A1- 2008 241 529

## Description

### Technical field

The invention relates to hot-melt adhesive compositions and use thereof for bonding of plastic foam plates, in particular extruded expanded polystyrene (XPS) foam plates. The invention also relates to a method for forming composite elements comprising at least two plastic foam plates bonded to each other using the hot-melt adhesive composition.

### Background of the invention

Polystyrene foams like molded expanded polystyrene (EPS) foam and extruded expanded polystyrene (XPS) foam are known as good thermal insulators. These materials have been used, for example, as building insulation materials such as in insulating concrete forms and structured insulation panels. Expanded polystyrene foams are closed cell foams, which are produced using blowing agents. In producing of EPS foams hydrocarbons such as pentane is typically used as a blowing agent whereas XPS foams are usually produced with hydrofluorocarbons. Due to the environmental concerns related to the use of hydrofluorocarbons, in particular the damaging effects to the ozone layer, these compounds have been replaced by other propellants in production of XPS foams.

Both EPS and XPS foam panels have been used for providing insulation of the entire building envelope. Due to their higher stiffness and greater moisture resistance, XPS foam panels are typically used in below-grade waterproofing systems and in roofing systems where insulation panel is placed on top of the roof membrane. Since the thermal insulation properties are directly proportional to the thickness of the panel, the insulation effect can be improved by using thicker panels. However, increasing the thickness of XPS panels has been found out to be difficult when using other propellants than hydrofluorocarbons. The problems related to production of thicker XPS panels have been solved by using composite elements composed of multiple thin XPS panels bonded to each other. The State-of-the-Art techniques for bonding XPS panels include, for example, solvent welding, thermal welding, and adhesive bonding. Thermal welding provides a high strength bond between the XPS panels but it also results in formation of a barrier layer between the panels reducing the water vapor permeability of the XPS panel. Bonding of XPS panels with adhesive has also been previously suggested. For example, EP1213118 B1 discloses a method for joining at least two hydrofluorocarbon (HCFC) free XPS panels to produce a composite board having a thickness of at least 70 mm, wherein the XPS panels are adhered to each other using a water vapor permeable adhesive, such as a reactive adhesive or a reactive hot-melt adhesive.

One of the disadvantages of joining XPS plates by adhesive bonding is related to the tendency of the adhesive to increase the flammability of the obtained composite element. In order to fulfil the fire proof requirements, building materials and components must pass the fire proof test B2 according to DIN 4102, corresponding to EN ISO 11925-2:2010 standard ("Ignitability of products subjected to direct impingement of flame"). Even though the individual XPS plates and the adhesive would fulfill the fire proof requirements, the same is not necessarily true for the composite element composed of multiple thin XPS plates bonded to each other using the adhesive. The tendency of the adhesive to increase the flammability of the composite element is also known as a "wicking effect", wherein the melting adhesive layers intensify the burning process of the composite element.

US 2008/241529 A1 discloses a flame proofed adhesive comprising 0.1 - 99.9 % by weight of an adhesive or thermoplastic polymer and 0.1 - 99.9% by weight of a flameproofing agent containing at least one phosphinic acid salt of the formula (I) and/or one diphosphinic acid salt of the formula (II) and 0.1 - 70 % by weight of a synergistic agent. Another published patent application EP 1 896 537 A1 discloses adhesive composition comprising a functionalized random propylene polymer (FRPP) having a heat of fusion of 0.5 - 70 J/g, a tackifier and a stabilizer selected from a list of stabilizers including a di-n-octadecyl-3,5-di-tert-butyl-4-hydroxybenzylphosphonate.

For the above mentioned reasons, polyurethane hot-melt adhesives, in particular reactive polyurethane hot-melt adhesives (PU-RHM), have been typically used for adhesive bonding of XPS plates. These types of adhesives show a good adhesion on polystyrene-based substrates, a high thermal stability, and lower flammability compared, for example, to polyolefin-based hot-melt adhesives (PO-HM). However, reactive polyurethane adhesives typically contain significant quantities of unreacted monomeric isocyanates or polyisocyanates, in particular diisocyanate monomers. Heating of the hot-melt adhesives to typical application temperature, such as from 85 to 200°C, in particular from 120 to 160°C, raises the vapor pressure of the unreacted diisocyanate monomers and causes them to volatilize. Due to the toxicity of the monomeric isocyanates, the legislator in the EU also requires these products to be labeled as harmful (Xn), if their unreacted monomeric diisocyanate content exceeds the limit of 0.1 % by weight. The problems caused by volatilization of non-reacted diisocyanate monomers during application of the hot-melt adhesive can be at least partially solved by providing ventilated structures such as "down draft booths". These solutions are, however, costly and sometimes difficult to apply.

There is thus a need for a polyolefin hot-melt adhesive having improved flame retarding properties. In particular, there is a need for a new type of polyolefin hot-melt adhesive, which can be used for providing multilayer composite polystyrene foam elements, which fulfill the fireproof requirements as defined in EN ISO 11925-2:2010 standard.

### Summary of the invention

The object of the present invention is to provide a polyolefin-based hot-melt adhesive composition having improved fire retarding properties.

In particular, it is an object of the present invention to provide a polyolefin based hot-melt adhesive composition, which can be used for providing multilayer composite polystyrene foam elements fulfilling the fire proof requirements as defined in EN ISO 11925-2:2010 standard.

The subject of the present invention is an adhesive composition as defined in claim 1.

It was surprisingly found out that the fire resisting properties of a multilayer composite polystyrene foam element can be significantly improved by adding an organic phosphorus-containing flame retardant into the adhesive composition used for bonding the polystyrene foam plates to each other.

The improved fire resistance of the composite polystyrene foam element is attributable to the use of the organic phosphorus-containing flame retardant in the adhesive composition. In fact, it was found out that the wicking effect previously observed during fire proof testing of composite polystyrene foam elements can be completely suppressed or at least significantly reduced by using the adhesive composition of the present invention for bonding of the polystyrene foam plates.

It was furthermore surprisingly found out that the fire resisting properties can be improved without having almost any negative impact on other application related properties, such as the mechanical properties of the cured adhesive bond.

One of the advantages of the adhesive composition of the present invention is that it can be used for providing multilayer composite polystyrene foam elements, which fulfil the fire proof requirements as defined in EN ISO 11925-2:2011-02 standard without having to use any halogen based flame retardants in the adhesive composition.

Another advantage of the adhesive composition of the present invention is that it has good workability under typical application conditions of hot-melt adhesives and it develops a high initial strength immediately after the application to a substrate upon cooling.

Other aspects of the present invention are presented in other independent claims. Preferred aspects of the invention are presented in the dependent claims.

### Detailed description of the invention

The subject of the present invention is an adhesive composition comprising:
a) At least one at 25 °C solid poly-α-olefin **P**,
b) At least one tackifying resin **TR,** and
c) At least one organic phosphorus-containing compound **PH** wherein the at least one organic phosphorus-containing compound **PH** is a phosphonate compound of formula (I) 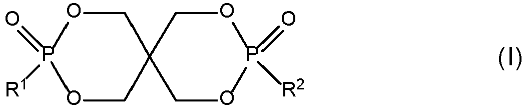 wherein R¹ and R² represent, independently from each other, substituted or unsubstituted linear or branched alkyl groups having 1 to 10 carbon atoms or substituted or unsubstituted cycloalkyl or aryl groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "a-olefin" designates an alkene having the molecular formula CₓH2ₓ (x corresponds to the number of carbon atoms), which features a carbon-carbon double bond at the first carbon atom (α-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "α-olefins" according to the present disclosure. The term "poly-α-olefin" designates homopolymers and copolymers obtained by polymerization or oligomerization of α-olefins or multiple distinct α-olefins.

The term "thermoplastic polymer" refers to any polymeric material which can be melted and re-solidified with little or no change in physical properties.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight may be determined by conventional methods, preferably by gel permeation-chromatography (GPC) using polystyrene as standard, styrene-divinylbenzene gel with porosity of 100 Angstrom, 1000 Angstrom and 10000 Angstrom as the column and tetrahydrofurane as a solvent, at 35°C.

The term "softening point" or "softening temperature" designates a temperature at which compound softens in a rubber-like state, or a temperature at which the crystalline portion within the compound melts. The softening point can be measured by a Ring and Ball method as defined in DIN EN 1238 standard.

The term "melting temperature" refers to a temperature at which a material undergoes transition from the solid to the liquid state. The melting temperature (Tₘ) is preferably determined by differential scanning calorimetry (DSC) according to ISO 11357-3 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "open time" designates the length of a time period during which an adhesive applied to a surface of a substrate is still able to form an adhesive bond after being contacted with another substrate.

The "amount or content of at least one component X" in a composition, for example "the amount of the at least one thermoplastic polymer P" refers to the sum of the individual amounts of all thermoplastic polymers P contained in the composition. For example, in case the at least one thermoplastic polymer P comprises 20 wt.-% of the total weight of the composition, the sum of the amounts of all thermoplastic polymers P contained in the composition equals 20 wt.-%.

The term "normal room temperature" refers to a temperature of ca. 23 °C.

The adhesive composition of the present invention comprises at least one at 25 °C solid poly-α-olefin **P.**

Suitable at 25 °C solid poly-α-olefins **P** include, for example, homopolymers, copolymers, and terpolymers of monomers selected from the group consisting of ethylene, propylene, 1-butene and higher α-olefins. Especially suitable at 25 °C solid poly-α-olefins **P** include homopolymers of propylene, copolymers of propylene and ethylene, copolymers of propylene and 1-butene or other higher α-olefins, homopolymers of ethylene, copolymers of ethylene and propylene, copolymers of ethylene and 1-butene or other higher α-olefins, and terpolymers of ethylene, propylene, and 1-butene.

According to one or more embodiments, the at least one at 25 °C solid poly-α-olefins **P** is an amorphous poly-α-olefin (APAO). The term "amorphous poly-α-olefin" designates in the present disclosure poly-α-olefins having a low crystallinity degree determined by a differential scanning calorimetry (DSC) measurements, such as in the range of 0.001 - 10 wt.-%, preferably 0.001 - 5 wt.-%. The crystallinity degree of a polymer can be determined by using DSC measurements to determine the heat of fusion of the polymer, from which the degree of crystallinity is calculated. In particular, the term "amorphous poly-α-olefin" designates poly-α-olefins lacking a crystalline melting temperature (Tₘ) as determined by DSC or equivalent technique.

Suitable amorphous poly-α-olefins to be used as the at least one at 25 °C solid poly-α-olefin **P** include, for example, amorphous atactic polypropylene, amorphous propene rich propylene-α-olefin copolymers, and amorphous propene rich propylene-α-olefin terpolymers. Such amorphous poly-α-olefins are known to a person skilled in the art and they can be obtained, for example, by polymerization of α-olefins in the presence of a polymerization catalyst, such as a Ziegler-Natta catalyst or a metallocene catalyst or any other single-site catalyst

Suitable amorphous poly-α-olefins are commercially available, for example, under the trade name of Vestoplast^{®} (from Evonik Industries), under the trade name of Eastoflex^{®} (from Eastman Corporation), and under the trade name of REXtac^{®} (from REXtac LLC).

According to one or more embodiments, the at least one at 25 °C solid poly-α-olefin **P** is selected from the group consisting of amorphous propylene-ethylene copolymers, amorphous propylene-butene copolymers, amorphous propylene-hexene copolymers, and amorphous propylene-ethylene-butene terpolymers.

According to one or more embodiments, the at least one at 25 °C solid poly-α-olefins **P** has
- a softening point (Tₛ) determined by using the Ring and Ball method as defined in DIN EN 1238 standard in the range of 60 - 200 °C, preferably 75 - 180 °C, more preferably 85 - 180 °C and/or
- an average molecular weight (Mₙ) in the range of 2500 - 35000 g/mol, preferably 3000 - 30000 g/mol, more preferably 5000 - 25000 g/mol and/or
- a melt viscosity at 190 °C determined according to DIN 53019 standard of not more than 150'000 MPa s, preferably not more than 135'000 MPa s, more preferably not more than 125'000 MPa s.

The melt viscosity of the at least one at 25 °C solid poly-α-olefin **P** determined according to DIN 53019 standard can be measured by busing a conventional viscometer at 5 revolutions per minute, for example by using a Brookfield DV-2 Thermosel viscometer with a spindle No. 27.

According to one or more embodiments, the at least one at 25 °C solid poly-α-olefin **P** has a
- xylene cold soluble content (XCS) determined at 25 °C according to ISO 16152-2005 standard of at least 80 wt.-%, preferably at least 90 wt.-%, more preferably at least 95 wt.-% and/or
- a heat of fusion (Hf) as determined by DSC measurements of not more than 35 J/g, preferably not more than 30 J/g, more preferably not more than 25 J/g.

According to one or more embodiments, the at least one at 25 °C solid poly-α-olefins **P** is a non-functionalized poly-α-olefin, preferably a non-functionalized amorphous poly-α-olefin. The term "functionalized polymer" designates in the present document polymers which are chemically modified so as to contain one or more functional groups on the polymer backbone. In contrast, the term "non-functionalized polymer" designates polymers which are not chemically modified so as to contain functional groups, for example, epoxy, silane, sulfonate, amide, or anhydride groups, on the polymer backbone. In the present document the terms "non-functionalized and "unmodified" are used interchangeably.

The amount of the at least one at 25 °C solid poly-α-olefin **P** in the adhesive composition is not particularly restricted. Preferably, the at least one at 25 °C solid poly-α-olefin **P** is present in the adhesive composition in an amount of at least 5 wt.-%, more preferably at least 15 wt.-%, even more preferably at least 20 wt.-%, still more preferably at least 25 wt.-%, based on the total weight of the adhesive composition.

According to one or more embodiments, the at least one at 25 °C solid poly-α-olefin **P** comprises 5-85 wt.-%, preferably 15 - 75 wt.-%, more preferably 20 - 65 wt.-%, even more preferably 25 - 60 wt.-%, still more preferably 25 - 55 wt.-% of the total weight of the adhesive composition. According to one or more further embodiments, the adhesive composition comprises, as polymer basis, at least 25 wt.-%, preferably at least 35 wt.-%, more preferably at least 45 wt.-%, even more preferably at least 50 wt.-% of the at least one at 25 °C solid poly-α-olefin **P.** The "polymer basis" of the adhesive composition of the present invention is considered to comprise all polymeric components, including at least the at least one at 25 °C solid poly-α-olefin **P** and the at least one tackifying resin **TR.**

The adhesive composition of the present invention further comprises at least one organic phosphorus-containing compound **PH.**

According to the present invention, the at least one organic phosphorus-containing compound **PH** is a phosphonate compound of formula (I) 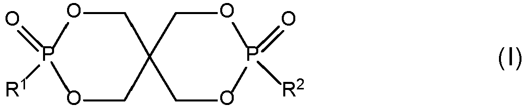 wherein R¹ and R² represent, independently from each other, substituted or unsubstituted linear or branched alkyl groups having 1 to 10 carbon atoms or substituted or unsubstituted cycloalkyl or aryl groups.

According to one or more embodiments, R¹ and R² represent, independently from each other, a substituted or unsubstituted linear or branched alkyl group having 1 to 4 carbon atoms, a substituted or unsubstituted benzyl, a substituted or unsubstituted phenyl, or a substituted or unsubstituted naphthyl.

R¹ and R² may also represent, independently from each other a halo alkyl group that is substituted with one, two, or three halogen atoms selected from chlorine and bromine, or a phenyl or a halogen-substituted phenyl group, such as 4-chlorophenyl, 2,4-dichlorophenyl, 2,4,6-trichlorophenyl, 4-bromophenyl, 2,4-dibromophenyl, or 2,4,6-tribromophenyl. It may, however, be preferred that R¹ and R² are free of halogen atoms.

According to one or more embodiments, R¹ and R² represent, independently from each other a phenyl alkyl group having 7 to 9 carbon atoms or a phenyl alkenyl group having 8 to 10 carbon atoms, which may be substituted in the alkyl group. According to one or more embodiments, R¹ and R² are not substituted with halogen atoms.

According to one or more preferred embodiments, and R² represent, independently from each other a methyl group, an ethyl group, or a propyl group, wherein methyl and ethyl groups are particularly preferred.

According to one or more embodiments, the at least one organic phosphorus-containing compound **PH** is a pentaerythritol spirobis(methylphosphonate), wherein the R¹ and R² in formula (I) represent methyl groups.

The fire retarding properties of the adhesive composition can be improved by increasing the amount of the at least one organic phosphorus-containing compound **PH** in the adhesive composition. However, it has been also found out that increasing the amount of the at least one organic phosphorus-containing compound **PH** also increases the melt viscosity and decreases the open time of the adhesive composition. It was further found out that in case the adhesive composition is used for bonding of polystyrene foam plates, increasing the amount of the at least one organic phosphorus-containing compound **PH** in the adhesive composition over a certain limit has a negative impact on the resulting adhesive bond strength. Without being bound to any theory, it is believed that in case the adhesive composition is used for bonding of porous substrates, such as polystyrene foam plates, the higher melt viscosity partially inhibits effective wetting of the surface of foam plate, which eventually results in decreased adhesive bond strength.

It is therefore preferred that the at least one organic phosphorus-containing compound **PH** is present in the adhesive composition in amount of not more than 55 wt.-%, more preferably not more than 50 wt.-%, even more preferably not more than 45 wt.-%, still more preferably not more than 40 wt.-%, based on the total weight of the adhesive composition.

According to one or more embodiments, the at least one organic phosphorus-containing compound **PH** comprises 1 - 55 wt.-%, preferably 5-50 wt.-%, more preferably 7.5 - 45 wt.-%, even more preferably 10 - 40 wt.-% of the total weight of the adhesive composition.

Adhesive compositions comprising the at least one organic phosphorus-containing compound **PH** in amounts within the above cited ranges have been found out to enable production of multilayer composite polystyrene foam elements fulfilling the requirements of the fire proof test according to EN ISO 11925-2:2011-02 standard as well as the mechanical stability requirements as defined in FprEN 1607:2012 standard.

According to one or more embodiments, the adhesive composition is free of halogen-containing flame retardants. The expression "substantially free of" is understood to mean that that the adhesive composition may contain only traces of halogen-containing flame retardants, such as less than 0.25 wt.-%, preferably less than 0.1 wt.-%, more preferably less than 0.01 wt.-%. Commonly used halogen-containing flame retardants include, for example, brominated and chlorinated aliphatic compounds and compounds containing aromatically bound bromine.

The fire resisting properties of the adhesive composition may further be improved by addition of auxiliary compounds, which may have a synergistic fire retarding effect with the at least one organic phosphorus-containing compound **PH.** According to one or more embodiments, the adhesive composition further comprises at least one 1,3,5-triazine compound or a mixture of two or more 1,3,5-triazine compound(s), preferably selected from the group consisting of tris-2-hydroxyethyl isocyanurate, melamine, melamine cyanurate, melamine phosphate, poly-[2,4-(piperazin-1,4-yl)-6-(morpholin-4-yl)-1,3,5-triazine], dimelamine phosphate, and melamine pyrophosphate. The amount of the at least one 1,3,5-triazine compound is, if used, preferably not more than 35 wt.-%, more preferably not more than 25 wt.-%, even more preferably not more than 15 wt.-% of the amount of the at least one organic phosphorus-containing compound **PH.**

It may, however, also be preferred that the adhesive composition is substantially free of 1,3,5-triazine compounds. According to one or more embodiments, the adhesive composition comprises not more than 0.5 wt.-%, preferably not more than 0.25 wt.-%, more preferably not more than 0.1 wt.-%, even more preferably not more than 0.01 wt.-% of 1,3,5-triazine compounds, preferably selected from the group consisting of tris-2-hydroxyethyl isocyanurate, melamine, melamine cyanurate, melamine phosphate, poly-[2,4-(piperazin-1,4-yl)-6-(morpholin-4-yl)-1,3,5-triazine], dimelamine phosphate, and melamine pyrophosphate.

The adhesive composition of the present invention further comprises at least one tackifying resin **TR.**

The term "tackifying resin" designates in the present document resins that in general enhance the adhesion and/or tackiness of a composition. The term "tackiness" refers in the present document to the property of a substance of being sticky or adhesive by simple contact, which can be measured, for example, as a loop tack. Preferred tackifying resins are tackifying at a temperature of 25 °C. Tackifying resins typically have a relatively low average molecular weight (Mₙ), such as not more than 5'000 g/mol, in particular not more than 3'500 g/mol, preferably not more than 2'500 g/mol.

Suitable tackifying resins to be used in the adhesive composition include synthetic resins, natural resins, and chemically modified natural resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable rosin esters can be obtained, for example, from reactions of rosins and polyhydric alcohol or polyol such as pentaerythritol, glycerol, dipentaerythritol, tripentaerythritol, trimethylol ethane, trimethylol propane, ethylene glycol, polyethylene glycol, 1,3-propanediol, 1,4-butanediol, 1,5-pentanediol, 1,6-hexanediol, trimethylene glycol, propylene glycol, neopentyl glycol, in the presence of acid or base catalyst.

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "synthetic resin" designates in the present document compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Suitable aliphatic monomers may include C₄, C₅, and C₆ paraffins, olefins, and conjugated diolefins. Examples of aliphatic monomers or cycloaliphatic monomers include butadiene, isobutylene, 1,3-pentadiene, 1,4-pentadiene, cyclopentane, 1-pentene, 2-pentene, 2-methyl-1-pentene, 2-methyl-2-butene, 2-methyl-2-pentene, isoprene, cyclohexane, 1- 3-hexadiene, 1-4-hexadiene, cyclopentadiene, and dicyclopentadiene. Examples of aromatic monomer include C₈, C₉, and C₁₀ aromatic monomers. Typical aromatic monomers include, styrene, alphamethyl styrene, vinyl toluene, methoxy styrene, tertiary butyl styrene, chlorostyrene, coumarone, and indene monomers including indene, and methyl indene, and combinations thereof.

Suitable synthetic resins include, for example, hydrocarbon resins, coumarone-indene resins, polyindene resins, polystyrene resins, vinyl toluene-alphamethyl styrene copolymer resins, and alphamethyl styrene resins.

The term "hydrocarbon resin" designates in the present document synthetic resins made by polymerizing mixtures of unsaturated monomers obtained from petroleum based feedstocks, such as by-products of cracking of natural gas liquids, gas oil, or petroleum naphthas. These types of hydrocarbon resins are also known as "petroleum resins" or as "petroleum hydrocarbon resins". The hydrocarbon resins include also pure monomer aromatic resins, which are prepared by polymerizing aromatic monomer feedstocks that have been purified to eliminate color causing contaminants and to precisely control the composition of the product. However, the pure aromatic resins may not be preferred for use as the at least one tackifying resin **TR** due to incompatibility of these resins with un-polar polyolefin matrixes.

Examples of suitable hydrocarbon resins to be used as the at least one tackifying resin **TR** include, for example, C5 aliphatic resins, mixed C5/C9 aliphatic/aromatic resins, aromatic modified C5 aliphatic resins, cycloaliphatic resins, mixed C5 aliphatic/cycloaliphatic resins, mixed C9 aromatic/cycloaliphatic resins, mixed C5 aliphatic/cycloaliphatic/C9 aromatic resins, aromatic modified cycloaliphatic resins, C9 aromatic resins, as well hydrogenated versions of the aforementioned resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50 %, 70 %, or 90 %.

Suitable hydrocarbon resins are commercially available, for example, under the trade names of Wingtack^{®} 86, Wingtack^{®} 95, Wingtack^{®} 98, Wingtack^{®} Plus, Wingtack^{®} Extra, Wingtack^{®} ET, Wingtack^{®} STS, and Wingtack^{®} 86 (all from Cray Valley); under the trade name of Escorez^{®}, such as Escorez^{®} 1000-series, Escorez^{®} 2000-series, Escorez^{®} 5300-series, Escorez^{®} 5400-series, and Escorez^{®} 5600-series (all from Exxon Mobile Chemical); under the trade name of Novares^{®}, for example Novares^{®} T series, Novares^{®} TT series, Novares^{®} TD series, Novares^{®} TL series, Novares^{®} TN series, Novares^{®} TK series, and Novares^{®} TV series (all from RUTGERS Novares GmbH); and under the trade name of Kristalex^{®}, Plastolyn^{®}, Piccotex^{®}, Piccolastic^{®} and Endex^{®} (all from Eastman Chemicals).

According to one or more embodiments, the at least one tackifying resin **TR** has:
- a softening point measured by a Ring and Ball method as defined in DIN EN 1238 standard in the range of 60 - 180 °C, preferably 70 - 160 °C, more preferably 75 - 150 °C, even more preferably 75 - 135 °C, still more preferably 80 - 125 °C and/or
- an average molecular weight (Mₙ) in the range of 250 - 5000 g/mol, preferably 300 - 3500 g/mol, more preferably 500 - 3000 g/mol, even more preferably 500 - 2500 g/mol, still more preferably 500 - 1500 g/mol and/or
- a melt viscosity at 140 °C determined according to DIN 53019 standard in the range of 1000 - 15000 MPa s, preferably 1250 - 10000 MPa s, more preferably 1500 - 7500 MPa s.

According to one or more embodiments, the at least one tackifying resin **TR** is a hydrocarbon resin, preferably selected from the group consisting of C5 aliphatic resins, C9 aromatic resins, mixed C5/C9 aliphatic/aromatic resins, and aromatic modified C5 aliphatic resins, more preferably from the group consisting of hydrogenated C5 aliphatic resins, hydrogenated C9 aromatic resins, mixed C5/C9 aliphatic/aromatic resins, and C5 resins co-polymerized with aromatic monomers.

The at least one tackifying resin **TR** is preferably present in the adhesive composition in an amount of at least 5 wt.-%, more preferably at least 10 wt.-%, even more preferably at least 15 wt.-%, based on the total weight of the adhesive composition. According to one or more embodiments, the at least one tackifying resin **TR** comprises 1 - 60 wt.-%, preferably 5-50 wt.-%, more preferably 10 - 45 wt.-%, even more preferably 15 - 40 wt.-% of the total weight of the adhesive composition.

According to one or more embodiments, the adhesive composition further comprise at least one thermoplastic polymer **TP** different from the at least one at 25 °C solid poly-α-olefin **P.**

Suitable thermoplastic polymers **TP** include, for example, homopolymers, copolymers, and terpolymers of monomers selected from the group consisting of ethylene, propylene, butylene, isobutylene, isoprene, vinyl acetate and vinyl ester with C₃ to C₁₂ carboxylic acids, styrene, and (meth)acrylate. The term "(meth)acrylate" designates in the present document both acrylates and methacrylates.

Preferably, the at least one thermoplastic polymer **TP** has a
- melting temperature (Tₘ) determined in differential scanning calorimetry (DSC) according to EN ISO 3146 standard using a heating rate of 2 °C/min of at least 85 °C, preferably at least 105 °C, more preferably at least 125 °C, even more preferably at least 135 °C, still more preferably at least 145 °C and/or
- a melt flow index (230 °C/2.16 kg) determined according to EN ISO 1133 standard of at least 2.5 g/10 min, preferably at least 5 g/10min, more preferably at least 10 g/10 min, even more preferably at least 15 g/10 min, still more preferably at least 25 g/10 min.

According to one or more embodiments, the at least one thermoplastic polymer **TP has**
- a melting temperature (Tₘ) determined in differential scanning calorimetry (DSC) according to EN ISO 3146 standard using a heating rate of 2 °C/min in the range of 85 - 200 °C, preferably 100 - 180 °C, more preferably 125 - 180 °C, even more preferably 135 - 175 °C and/or
- a melt flow index (230 °C/2.16 kg) determined according to EN ISO 1133 standard in the range of 2.5 - 100 g/10min, preferably 5 - 75 g/10min, more preferably 10 - 65 g/10 min, even more preferably 15 - 50 g/10 min.

Preferably, the at least one thermoplastic polymer **TP,** if used, is present in the adhesive composition in an amount of not more than 30 wt.-%, preferably not more than 25 wt.-%, more preferably not more than 20 wt.-%, based on the total weight of the adhesive composition. According to one or more embodiments, the at least one thermoplastic polymer **TP** comprises 0.5 - 25 wt.-%, preferably 1 - 15 wt.-%, more preferably 1.5 - 10 wt.-%, even more preferably 2.5 - 7.5 wt.-% of the total weight of the adhesive composition.

According to one or more embodiments, the at least one thermoplastic polymer **TP** is selected from the group consisting of homopolymers and copolymers of propylene, ethylene, butylene, isobutylene, isoprene, vinyl acetate, and styrene, preferably from the group consisting of polypropylene, propylene copolymers, polyethylene, and ethylene copolymers, more preferably from the group consisting of propylene homopolymers and propylene copolymers. The term "propylene homopolymer" refers to polymers which consist essentially of repeat units deriving from propylene, such as at least 90 wt.-%, preferably at least 95 wt.-%, more preferably at least 99 wt.-%, such as 100 wt.-% of repeat units deriving from propylene. According to one or more embodiments, the at least one thermoplastic polymer **TP** is a propylene homopolymer.

The adhesive composition can further comprise at least one polar-modified polyolefin wax. The term "polyolefin wax" designates in the present document low molecular weight polymers of linear or branched α-olefins having from 2 to 30 carbon atoms and a number average molecular weight (Mₙ) in the range of 5000 - 25000 g/mol. They include both homopolymers and copolymers of the above mentioned linear or branched α-olefins. Polyolefin waxes can be obtained by thermal decomposition of polyolefin plastics, in particular polyethylene plastic, or by direct polymerization of olefins. Suitable polymerization processes include, for example, free-radical processes, where the olefins, for example, ethylene, are reacted at high pressures and temperatures to give more or less branched waxes and processes, where ethylene and/or higher α-olefins, in particular propylene, are polymerized using metalorganic catalysts, for example Ziegler-Natta or metallocene catalysts, to give unbranched or branched waxes. The polyolefin waxes have generally at least partially crystalline structure.

The addition of polar-modified polyolefin waxes has been found to improve the adhesion of the adhesive composition on polar substrates. Suitable polar-modified polyolefin waxes include the ones produced by grafting of polar olefin monomers, for example, α-β-unsaturated carboxylic acids and/or derivatives thereof, for example (meth)acrylic acid or maleic acid anhydride and/or substituted and/or unsubstituted styrenes, to polyolefin waxes.

According to one or more embodiments, the adhesive composition further comprises at least one polar-modified polyolefin wax **PW,** preferably at least one maleic acid anhydride functionalized polyolefin wax **PW,** preferably selected from the group consisting of ethylene and propylene homo and copolymer waxes grafted with maleic acid anhydride, in particular from the group consisting of polypropylene or polyethylene waxes grafted with maleic acid anhydride.

Preferably, the at least one maleic acid anhydride functionalized polyolefin wax **PW** has a softening point determined by the Ring and Ball method as defined in DIN EN 1238 standard of not more than 180 °C, more preferably not more than 160 °C, even more preferably not more than 140 °C. According to one or more embodiments, the at least one maleic acid anhydride functionalized polyolefin wax **PW** has a softening point determined by the Ring and Ball method as defined in DIN EN 1238 standard in the range of 75 - 180 °C, preferably 85 - 160 °C, more preferably 90 - 150 °C.

The grafting degree of the at least one maleic anhydride functionalized polyolefin wax **PW** is preferably at least 1 wt.-%, for example, at least 3 wt.-%, relative to the weight of the non-functionalized polyolefin wax. The term "grafting degree" designates the ratio of polymer groups in side chains to the polymer constituting the main chain of the grafted compound expressed as weight percentage. According to one or more embodiments, the at least one maleic anhydride functionalized polyolefin wax **PW** has a grafting degree in the range of 2 - 15 wt.-%, preferably 4 - 15 % wt.-%, more preferably 8 - 12 wt.-% and/or a melt viscosity at a temperature of 170 °C determined according to DIN 53019 standard in the range of 10 - 10000 mPa s, preferably 100 to 5000 mPa s, more preferably 500 - 3500 mPa·s.

The at least one maleic anhydride functionalized polyolefin wax **PW,** if used, is preferably present in the adhesive composition in an amount of at least 0.5 wt.-%, more preferably at least 1 wt.-%, based on the total weight of the adhesive composition. According to one or more embodiments, the at least one maleic anhydride functionalized polyolefin wax **PW** comprises 0.5 - 15 wt.-%, preferably 1 - 12.5 wt.-%, more preferably 1.5 - 10 wt.-%, even more preferably 2.5 - 7.5 wt.-% of the total weight of the adhesive composition.

The adhesive composition may optionally contain further additional constituents (auxiliaries) which are customary for adhesives, in particular for hot-melt adhesives. Examples of suitable auxiliaries include fillers, plasticizers, UV absorbers, UV stabilizers and heat stabilizers, antioxidants, optical brighteners, pigments, dyes, and dryers. The auxiliaries, if used at all, preferably comprise not more than 25 wt.-%, more preferably not more than 15 wt.-%, even more preferably not more than 5 wt.-% of the total weight of the adhesive composition.

The adhesive composition of the invention has good workability under usual application conditions, in particular at temperatures from 100 to 200°C, meaning that at application temperature the adhesive has sufficiently low viscosity to enable application to a substrate in a molten state. The adhesive composition also develops a high initial strength immediately after the application to a substrate upon cooling.

The preferences given above for the at least one at 25 °C solid poly-α-olefin **P,** the at least one tackifying resin **TR,** the at least one organic phosphorus-containing compound **PH,** the at least one thermoplastic polymer **TP,** and the at least one maleic acid anhydride functionalized polyolefin wax **PW** apply equally to all other subjects of the present invention unless stated otherwise.

Another subject of the present invention is use of the adhesive composition of the present invention for bonding of substrates, preferably for bonding of plastic foam plates, more preferably for bonding of polystyrene foam plates, still more preferably for bonding of extruded expanded polystyrene foam plates. Preferably, the extruded expanded polystyrene foam plates are free of hydrofluorocarbons.

According to one or more embodiments, the plastic foam plates, preferably the polystyrene foam plates, more preferably the extruded expanded polystyrene plates have a density determined by using the method as defined in ISO 845 standard in the range of 15 - 125 kg/m³, preferably 20 - 100 kg/m³, more preferably 25 - 75 kg/m³, even more preferably 25 - 65 kg/m³.

Suitable plastic foam plates, preferably polystyrene foam plates, more preferably extruded expanded polystyrene foam plates may further contain one of more organic or inorganic flame retardants, wherein the total amount of these is preferably in the range of 0.25 - 20 wt.-%, more preferably 1 - 15 wt.-%, even more preferably 2.5 - 15 wt.-%, still more preferably 3.5 - 10 wt.-%, based on the total weight of the foam plate.

Another subject of the present invention is a method for producing a composite element, the method comprising steps of:
i) Heating an adhesive composition of the present invention to provide a melted adhesive composition,
ii) Applying the melted adhesive composition to a first surface of a first substrate **S1** to form an adhesive film,
iii) Contacting the adhesive film with a first surface of a second substrate **S2.**

The first **S1** and second **S2** substrates are preferably three-dimensional shaped articles, more preferably sheet-like elements having a first and a second major surfaces defining a thickness there between and a length and width at least 5 times, preferably at least 10 times, more preferably at least 15 times greater than the thickness of the sheet-like element. The term "thickness" refers here to a dimension of a sheet-like element that is measured in a plane that is substantially perpendicular to the length and width dimensions of said sheet-like element. As and when required, the first surface of the first substrate **S1** and/or the first surface of the second substrate **S2** may be pretreated prior to the application of the melted adhesive composition.

According to one or more embodiments, the first **S1** and second **S2** substrates are sheet-like elements and in step ii) of the method, the melted adhesive composition is applied on the first major surface of the first substrate **S1** and in step iii), the adhesive film is contacted with the first major surface of the second substrate **S2.**

According to one or more embodiments, the first substrate **S1** and/or the second substrate **S2** is a plastic foam plate, preferably a polystyrene foam plate, more preferably an extruded expanded polystyrene foam plate, preferably having a density determined by using the method as defined in ISO 845 standard in the range of 15 - 125 kg/m³, more preferably 20 - 100 kg/m³, even more preferably 25 - 75 kg/m³, still more preferably 25 - 65 kg/m³, wherein the first substrate **S1** and/or the second substrate **S2** is preferably free of hydrofluorocarbons.

According to one or more preferred embodiments, the first substrate **S1** and the second substrate **S2** are a plastic foam plates, preferably a polystyrene foam plates, more preferably an extruded expanded polystyrene foam plates, preferably having a density determined by using the method as defined in ISO 845 standard in the range of 15 - 125 kg/m³, more preferably 20 - 100 kg/m³, even more preferably 25 - 75 kg/m³, still more preferably 25 - 65 kg/m³, wherein the first substrate **S1** and the second substrate **S2** are preferably free of hydrofluorocarbons.

The thickness of the first **S1** and second **S2** substrates is not particularly restricted. It may, however, be preferable that the first substrate **S1** and/or the second substrate **S2** has a thickness of not more than 150 mm, more preferably not more than 125 mm, such as in the range of 5 - 150 mm, preferably 10 - 125 mm, more preferably 15 - 100 mm, even more preferably 25 - 100 mm, still more preferably 35 - 100 mm, in particular 40 - 90 mm.

Suitable plastic foam plates, preferably polystyrene foam plates, more preferably extruded expanded polystyrene foam plates used as the first **S1** and/or second substrate **S2** may further contain one of more organic or inorganic flame retardants, wherein the total amount of these is preferably in the range of 0.25 - 20 wt.-%, more preferably 1 - 15 wt.-%, even more preferably 2.5 - 15 wt.-%, still more preferably 3.5 - 10 wt.-%, based on the total weight of the foam plate.

According to one or more embodiments, the first substrate **S1** and the second substrate **S2** are extruded expanded polystyrene (XPS) foam plates, wherein the first surface of the first substrate **S1** and/or the first surface of the second substrate **S2** is preferably free of an extrusion skin, more preferably wherein the first surface of the first substrate **S1** and the first surface of the second substrate **S2** are free of an extrusion skin.

The extrusion skin of an extruded expanded polystyrene plate can be removed using any conventional technique, such as by milling. In removing the extrusion skin, the closed cells forming the surface of an extruded expanded foam plate are cut open. This type of pre-treatment is typically conducted to improve the adhesive bond strength.

In the method for producing a composite element, the adhesive composition is first heated to a temperature above the softening point (Tₛ) of the adhesive composition and then applied on the first surface of the first substrate in molten state using any conventional technique, for example, by brushing, slot die coating, roller coating, extrusion coating, calender coating, or spray coating. According to one or more embodiments, the adhesive composition is applied to the first surface of the first substrate **S1** with a coating weight of 15 - 250 g/m², preferably 25 - 200 g/m², more preferably 25 - 150 g/m², even more preferably 30 - 100 g/m², still more preferably 35 - 85 g/m².

The temperature to which the adhesive composition is heated for application depends on the embodiment of the adhesive composition. It may, for example, be preferable that adhesive composition is heated in step i) of the method to a temperature of at least 135 °C, more preferably of at least 150 °C, such as to a temperature in the range of 150 - 235 °C, preferably 160 - 200 °C, more preferably 165 - 200 °C, even more preferably 170 - 200 °C.

The melted adhesive composition is preferably applied to the first surface of the first substrate **S1** to form a continuous or a discontinuous adhesive film, which preferably covers at least 50 %, more preferably at least 75 %, even more preferably at least 85 %, still more preferably at least 90 % of the first surface of the first substrate **S1.**

According to one or more embodiments, the method for producing a composite element comprises a further step ii'), in which the adhesive film formed in step i) of the method is reactivated by heating before being contacted with the first surface of the second substrate **S2** in step iii). The preferred reactivation temperature depends on the embodiment of the adhesive composition. It may be preferable, for example, that the adhesive film is reactivated by heating to a temperature in the range of 120 - 200 °C, preferably 150 - 190 °C, more preferably 160 - 180 °C. The heating of the adhesive film in step ii') can be conducted using any conventional technique, such as by heating in an oven, by heating by air stream, or by heating with infrared (IR)-radiation, preferably by heating with infrared (IR)-radiation. The reactivated adhesive film is preferably contacted with the first surface of the second substrate **S2** within short time after the reactivation temperature has been reached, in any case within the open time of the adhesive composition.

Still another subject of the present invention is a composite element comprising:
a) A first substrate **S1,**
b) A layer of an adhesive composition of the present invention, and
c) A second substrate **S2,** wherein the layer of adhesive composition is arranged between the first substrate **S1** and the second substrate **S2** such that the substrates are adhesively bonded to each other over at least part of their opposing surfaces via the layer of adhesive composition.

According to one or more embodiments, the first substrate **S1** and/or the second substrate **S2** is a plastic foam plate, preferably a polystyrene foam plate, more preferably an extruded expanded polystyrene foam plate, preferably having a density determined by using the method as defined in ISO 845 standard in the range of 15 - 125 kg/m³, more preferably 20 - 100 kg/m³, even more preferably 25 - 75 kg/m³, still more preferably 25 - 65 kg/m³, wherein the first substrate **S1** and/or the second substrate **S2** is preferably free of hydrofluorocarbons.

According to one or more preferred embodiments, the first substrate **S1** and the second substrate **S2** are a plastic foam plates, preferably a polystyrene foam plates, more preferably an extruded expanded polystyrene foam plates, preferably having a density determined by using the method as defined in ISO 845 standard in the range of 15 - 125 kg/m³, more preferably 20 - 100 kg/m³, even more preferably 25 - 75 kg/m³, still more preferably 25 - 65 kg/m³, wherein the first substrate **S1** and the second substrate **S2** are preferably free of hydrofluorocarbons.

The thickness of the first **S1** and second **S2** substrates is not particularly restricted. It may, however, be preferable that the first substrate **S1** and/or the second substrate **S2** has a thickness of not more than 150 mm, more preferably not more than 125 mm, such as in the range of 5 - 150 mm, preferably 10 - 125 mm, more preferably 15 - 100 mm, even more preferably 25 - 100 mm, still more preferably 35 - 100 mm, in particular 40 - 90 mm.

Suitable plastic foam plates, preferably polystyrene foam plates, more preferably extruded expanded polystyrene foam plates used as the first **S1** and/or second substrate may further contain one of more organic or inorganic flame retardants, wherein the total amount of these is preferably in the range of 0.25 - 20 wt.-%, more preferably 1 - 15 wt.-%, even more preferably 2.5 - 15 wt.-%, still more preferably 3.5 - 10 wt.-%, based on the total weight of the plate.

According to one or more embodiments, the first substrate **S1** and the second substrate **S2** are extruded expanded polystyrene (XPS) foam plates, wherein the first surface of the first substrate **S1** and/or the first surface of the second substrate **S2** is preferably free of an extrusion skin, more preferably wherein the first surface of the first substrate **S1** and the first surface of the second substrate **S2** are free of an extrusion skin.

Preferably, the layer of adhesive composition between the first substrate **S1** and the second substrate **S2** has a thickness of at least 10 µm, preferably at least 15 µm, more preferably at least 25 µm. According to one or more embodiment, the layer of adhesive composition has a thickness in the range of 10 - 1000 µm, preferably 15 - 500 µm, more preferably 25 - 250 µm, even more preferably 35 - 150 µm.

According to one or more embodiments, the composite element has a tensile strength determined at normal room conditions (temperature of 23 °C, 50 % relative humidity) using the method as defined in FprEN 1607:2012 standard of at least 100 kPa, preferably at least 125 kPa, more preferably at least 150 kPa, even more preferably at least 175 kPa, still more preferably at least 200 kPa.

### Examples

The followings compounds and products shown in Table 1 were used in the examples.

**Table 1**

| | |
|---|---|
| Polymer **P** | Amorphous poly-α-olefin, softening point 100 - 140 °C |
| Polymer **TP** | Propylene homo polymer, MFI (230 °C/2.16 kg) 25 - 50 g/10 min |
| Tackifying resin **TR** | C5/C9 hydrocarbon resin, softening point 70 - 100 °C |
| Stabilizer | Sterically hindered phenolic antioxidant |
| Flame retardant-1 | Cyclic phosphonate ester, d₅₀ particle size 5-10 µm |
| Flame retardant-2 | Surface treated aluminum trihydroxide, d₅₀ particle size 1-5 µm |
| Flame retardant-3 | Aminoether-based hindered amine light stabilizer |

The adhesive compositions were prepared by mixing the ingredients as presented in Table 2 under vacuum and with stirring at a temperature of 190 °C for 1 hour. The adhesive compositions were then characterized using the following measurement methods.

### Viscosity at 180 °C

The sample adhesive composition provided in a sealed tube was preheated in an oven at a temperature of 180 °C for a time period of 20 minutes. After the heating, a sample of 9.5 g of the adhesive composition was weighted and placed in a disposable sleeve to a viscometer. The viscosity was measured at temperature of 180 °C at 5 revolutions per minute using a Brookfield DV-2 Thermosel viscometer with a spindle No. 27. The values obtained with 20 minutes of tempering at the measurement temperature and five minutes of measurement were recorded as representative viscosities.

### Softening point

The sample adhesive composition provided in a sealed tube was preheated in an oven at a temperature of 200 °C for a time period of 20 minutes. The molten adhesive was applied bubble free in a metal ring. After cooling the disk-shaped adhesive specimen was removed from the ring and loaded into fitting of a ring and ball tester. The temperature of the adhesive specimen is increased by 6 °C per minute and the temperature at which the ball placed on the adhesive specimen falls through the specimen is recorded as the softening point.

The values of softening point presented in Table 2 have been obtained as an average of two measurements conducted with the same adhesive composition.

### Open time

The sample adhesive composition provided in a sealed tube was first preheated in an oven to at temperature of 200 °C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper strip had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 200 °C with the heating plate.

Immediately after application of the adhesive, the silicone paper strip was removed from the heating plate and placed (with the adhesive film facing upwards) on a sheet of plywood at room temperature (23°C) and the time was recorded as the starting point of the measurement. Every 10 seconds a short strip of silicone coated paper having dimensions of 10 cm x 1 cm and formed in a roll (non-siliconized surface facing outwards) was placed on the adhesive film and then slowly removed to separate the strip from the adhesive film. The procedure was repeated until the adhesive no longer could be transferred to the paper strip, i.e. the surface of the removed paper strip remained dry without any adhesive. The time interval between the starting point of the measurement and the last sampling point was recorded as the open time (in seconds) of the adhesive composition.

The values of open time presented in Table 2 have been obtained as an average of three measurements conducted with the same adhesive composition.

### Preparation of composite test specimen

In order to determine the mechanical and flame retarding properties of the adhesive compositions, composite test specimen composed of two identical XPS plates bonded to each other using the tested adhesive composition were prepared.

Two different types of commercially available XPS plates were used for preparing the composite test specimen; first type of XPS plate ("Type A") had a compressive strength of 500 kPa, a density of 34-40 kg/m³, and a thickness of 50 mm whereas the second type of XPS plate ("Type B") had a compressive strength of 700 kPa, a density of 42-46 kg/m³, and a thickness of 60 mm. Both A and B types of XPS plates contained the same flame retardant and had a surface area of ca. 0.75 m². In preparing of the composite test specimen, the tested adhesive composition was first heated to a temperature of 180 - 200 °C and then applied on the surface of a XPS plate in a molten state with a coating weight of 30-70 g/m² using a calender coater. The adhesive film was then contacted with a surface of another XPS plate and the XPS plates were then pressed together using a calender with pressure rollers.

### Tensile strength

The tensile strengths of the composite test specimen were determined using the method as defined in FprEN 1607:2012 standard at normal room conditions (temperature of 23 °C and 50 % relative humidity) and at a temperature of 60 °C (measured right after storage at 60 °C for 20 hours).

The values of tensile strength (@RT and @60 °C) presented in Table 3 have been obtained as an average of three measurements conducted with the same adhesive composition. Regarding the numbering of the examples in Table 3, the first part designates the adhesive composition as presented in Table 2 and the second part designates the number of the experiment, for example, "Ref-1.1" refers to the first experiment conducted with the adhesive composition of "Ref-1" in Table 2.

### Flammability test

The flammability test was conducted according to the method as defined in DIN EN 11925-2:2010 standard ("Ignitability of products subjected to direct impingement of flame"). The result of the conducted test was either "Passed" or "Not passed" in case the composite test specimen failed the test. According to the DIN EN 11925-2:2010 standard, the flammability test is failed if the maximum flame height during burning time of 20 seconds exceeds 150 mm or if the flaming droplets/particles ignite the filter paper positioned under the burning test specimen at any time after start of the burning test.

**Table 2**

| **Compositions [wt.-%]** | **Ref-1** | **Ref-2** | **Ref-3** | **Ex-1** | **Ex-2** |
|---|---|---|---|---|---|
| Polymer **P** | 54.72 | 21.77 | 53.09 | 49.25 | 35.57 |
| Polymer **TP** | 5.00 | 1.98 | 4.83 | 4.50 | 3.24 |
| Tackifying Resin **HR** | 39.78 | 15.82 | 38.60 | 35.80 | 25.87 |
| Stabilizer | 0.50 | 0.40 | 0.98 | 0.45 | 0.32 |
| Flame retardant-1 | - | - | - | 10.00 | 35.00 |
| Flame retardant-2 | - | 60.03 | - | - | - |
| Flame retardant-3 | - | - | 2.50 | - | - |
| Total | 100.00 | 100.00 | 100.00 | 100.00 | 100.00 |

| **Properties** | | | | | |
|---|---|---|---|---|---|
| Viscosity at 180 °C [MPa·s] | 4400 | - | - | 6500 | - |
| Open time, 500 µm [s] | 140 | - | - | 100 | 40 |
| Softening point [°C] | 152 | - | - | 152 | 156 |

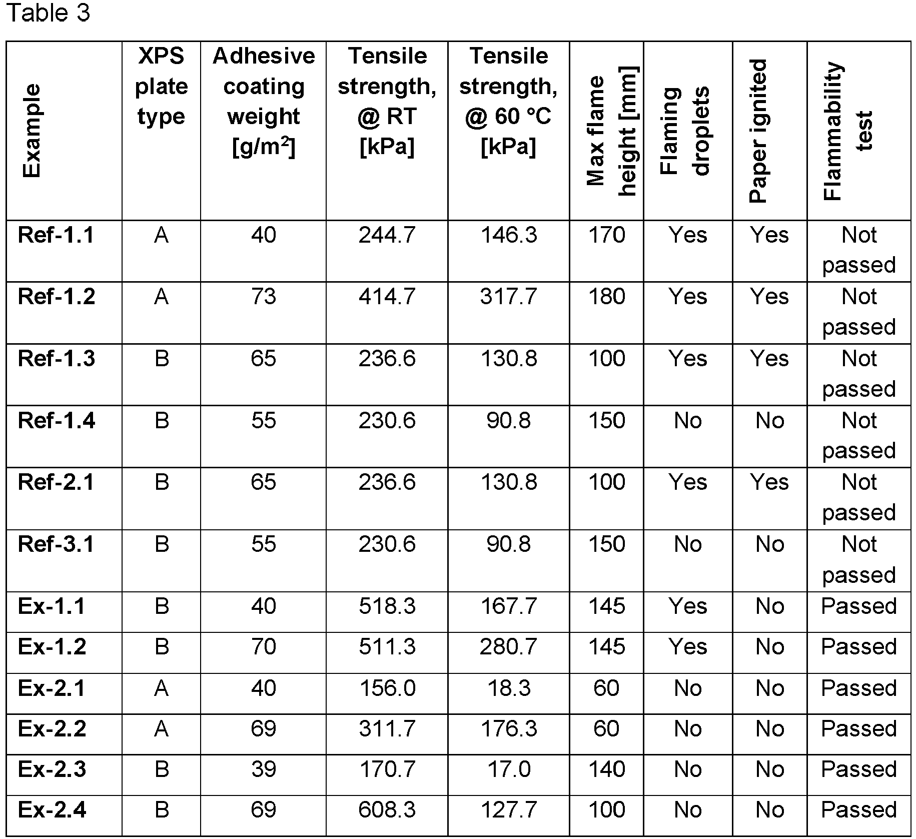

## Claims

1. An adhesive composition comprising:
a) At least one at 25 °C solid poly-α-olefin **P,**
b) At least one tackifying resin **TR,** and
c) At least one organic phosphorus-containing compound **PH,**
wherein the at least one organic phosphorus-containing compound **PH** is a phosphonate compound of formula (I) 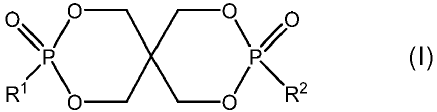
wherein R¹ and R² represent, independently from each other, substituted or unsubstituted linear or branched alkyl groups having 1 to 10 carbon atoms or substituted or unsubstituted cycloalkyl or aryl groups.

2. The adhesive composition according to claim 1, wherein the at least one at 25 °C solid poly-α-olefin **P** is an amorphous poly-α-olefin (APAO).

3. The adhesive composition according to claim 1 or 2, wherein the at least one at 25 °C solid poly-α-olefin **P** has a softening point determined by using the Ring and Ball method as defined in DIN EN 1238 standard in the range of 60 - 200°C, preferably 75 - 180 °C, more preferably 85 - 180 °C and/or a melt viscosity at 190 °C determined according to DIN 53019 standard of not more than 150000 MPa s, preferably not more than 135000 MPa s, more preferably not more than 125000 MPa.s.

4. The adhesive composition according to any one of previous claims, wherein the at least one at 25 °C solid poly-α-olefin **P** comprises of 5 - 85 wt.-%, preferably 15 - 75 wt.-%, more preferably 20 - 65 wt.-%, of the total weight of the adhesive composition.

5. The adhesive composition according to any one of previous claims, wherein the at least one organic phosphorus-containing compound **PH** is free of nitrogen.

6. The adhesive composition according to any one of previous claims, wherein R¹ and R² represent, independently from each other a methyl group, an ethyl group, or a propyl group, preferably methyl groups.

7. The adhesive composition according to any one of previous claims, wherein the at least one organic phosphorus-containing compound **PH** is present in the adhesive composition in an amount of 1 - 55 wt.-%, preferably 5-50 wt.-%, more preferably 7.5 - 45 wt.-% of the total weight of the adhesive composition.

8. The adhesive composition according to any one of previous claims, wherein the at least one tackifying resin **TR** has a softening point measured by Ring and Ball method according to DIN EN 1238 standard of 60 - 180 °C, preferably 70 - 160 °C, more preferably 75 -150 °C.

9. The adhesive composition according to any one of previous claims, wherein the at least one tackifying resin **TR** comprises 1 - 60 wt.-%, preferably 5-50 wt.-%, more preferably 10 - 45 wt.-% of the total weight of the adhesive composition.

10. The adhesive composition according to any one of previous claims further comprising at least one thermoplastic polymer **TP** different from the at least one at 25 °C solid poly-α-olefin **P,** wherein the at least one thermoplastic polymer **TP** is preferably selected from the group consisting of propylene homo polymers and propylene copolymers.

11. The adhesive composition according to claim 10, wherein the at least one thermoplastic polymer **TP** comprises 0.5 - 25 wt.-%, preferably 1 - 15 wt.-%, more preferably 1.5 - 10 wt.-% of the total weight of the adhesive composition.

12. Use of the adhesive composition according to any one of previous claims for bonding of substrates, preferably for bonding of plastic foam plates.

13. A method for producing a composite element, the method comprising steps of:
i) Heating an adhesive composition according to any one of claims 1-11 to provide a melted adhesive composition,
ii) Applying the melted adhesive composition to a first surface of a first substrate **S1** to form an adhesive film,
iii) Contacting the adhesive film with a first surface of a second substrate **S2.**

14. The method according to claim 13, wherein the first substrate **S1** and/or the second substrate **S2** is a plastic foam plate, preferably an expanded polystyrene foam plate, more preferably an extruded expanded polystyrene foam plate.

15. A composite element comprising:
a) A first substrate **S1,**
b) A layer of an adhesive composition according to any one of claims 1-11, and
c) A second substrate **S2,** wherein the layer of adhesive composition is arranged between the first substrate **S1** and the second substrate **S2** such that said substrates are adhesively bonded to each other over at least part of their opposing surfaces via said layer of adhesive composition.

## Revendications

1. Composition d'adhésif comprenant :
a) au moins une poly-α-oléfine P solide à 25 °C,
b) au moins une résine tackifiante TR, et
c) au moins un composé organique contenant du phosphore PH,
l'au moins un composé organique contenant du phosphore PH étant un composé de phosphonate de formule (I) 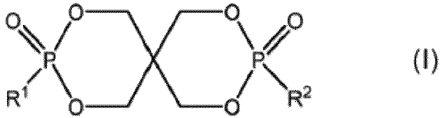
R¹ et R² représentant, indépendamment l'un de l'autre, des groupes alkyle linéaires ou ramifiés substitués ou non substitués ayant 1 à 10 atomes de carbone ou des groupes cycloalkyle ou aryle substitués ou non substitués.

2. Composition d'adhésif selon la revendication 1, l'au moins une poly-α-oléfine P solide à 25 °C étant une poly-α-oléfine amorphe (APAO).

3. Composition d'adhésif selon la revendication 1 ou 2, l'au moins une poly-α-oléfine P solide à 25 °C ayant un point de ramollissement déterminé en utilisant le procédé à bille et anneau tel que défini dans la norme DIN EN 1238 dans la plage de 60 à 200 °C, préférablement de 75 à 180 °C, plus préférablement de 85 à 180 °C et/ou une viscosité à l'état fondu à 190 °C déterminée selon la norme DIN 53019 non supérieure à 150 000 MPa.s, préférablement non supérieure à 135 000 MPa.s, plus préférablement non supérieure à 125 000 MPa.s.

4. Composition d'adhésif selon l'une quelconque des revendications précédentes, l'au moins une poly-α-oléfine P solide à 25 °C représentant de 5 à 85 % en poids, préférablement de 15 à 75 % en poids, plus préférablement de 20 à 65 % en poids, du poids total de la composition d'adhésif.

5. Composition d'adhésif selon l'une quelconque des revendications précédentes, l'au moins un composé organique contenant du phosphore PH étant exempt d'azote.

6. Composition d'adhésif selon l'une quelconque des revendications précédentes, R¹ et R² représentant, indépendamment l'un de l'autre, un groupe méthyle, un groupe éthyle ou un groupe propyle, préférablement des groupes méthyle.

7. Composition d'adhésif selon l'une quelconque des revendications précédentes, l'au moins un composé organique contenant du phosphore PH étant présent dans la composition d'adhésif en une quantité de 1 à 55 % en poids, préférablement de 5 à 50 % en poids, plus préférablement de 7,5 à 45 % en poids du poids total de la composition d'adhésif.

8. Composition d'adhésif selon l'une quelconque des revendications précédentes, l'au moins une résine tackifiante TR ayant un point de ramollissement mesuré par le procédé à bille et anneau selon la norme DIN EN 1238 de 60 à 180 °C, préférablement de 70 à 160 °C, plus préférablement de 75 à 150 °C.

9. Composition d'adhésif selon l'une quelconque des revendications précédentes, l'au moins une résine tackifiante TR représentant 1 à 60 % en poids, préférablement 5 à 50 % en poids, plus préférablement 10 à 45 % en poids du poids total de la composition d'adhésif.

10. Composition d'adhésif selon l'une quelconque des revendications précédentes comprenant en outre au moins un polymère thermoplastique TP différent de l'au moins une poly-α-oléfine P solide à 25 °C, l'au moins un polymère thermoplastique TP étant préférablement choisi dans le groupe constitué par des homopolymères de propylène et des copolymères de propylène.

11. Composition d'adhésif selon la revendication 10, l'au moins un polymère thermoplastique TP représentant 0,5 à 25 % en poids, préférablement 1 à 15 % en poids, plus préférablement 1,5 à 10 % en poids du poids total de la composition d'adhésif.

12. Utilisation de la composition d'adhésif selon l'une quelconque des revendications précédentes pour la liaison de substrat, préférablement pour la liaison de plaques de mousse de matière plastique.

13. Procédé pour la production d'un élément composite, le procédé comprenant les étapes de :
i) chauffage d'une composition d'adhésif selon l'une quelconque des revendications 1 à 11 pour fournir une composition d'adhésif fondue,
ii) application de la composition d'adhésif fondue sur une première surface d'un premier substrat S1 pour former un film d'adhésif,
iii) mise en contact du film d'adhésif avec une première surface d'un deuxième substrat S2.

14. Procédé selon la revendication 13, le premier substrat S1 et/ou le deuxième substrat S2 étant une plaque de mousse de matière plastique, préférablement une plaque de mousse de polystyrène expansé, plus préférablement une plaque de mousse de polystyrène expansé extrudé.

15. Élément composite comprenant :
a) un premier substrat S1,
b) une couche d'une composition d'adhésif selon l'une quelconque des revendications 1 à 11, et
c) un deuxième substrat S2, la couche de composition d'adhésif étant agencée entre le premier substrat S1 et le deuxième substrat S2 de sorte que lesdits substrats soient liés de manière adhésive l'un avec l'autre sur au moins une partie de leurs surfaces opposées via ladite couche de composition d'adhésif.

## Patentansprüche

1. Klebstoffzusammensetzung, umfassend:
a) mindestens ein bei 25 °C festes Poly-α-olefin **P,**
b) mindestens ein Klebrigmacherharz **TR** und
c) mindestens eine organische phosphorhaltige Verbindung **PH,**
wobei es sich bei der mindestens einen organischen phosphorhaltigen Verbindung **PH** um eine Phosphonatverbindung der Formel (I) 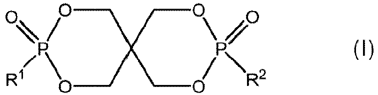
handelt, wobei R¹ und R² unabhängig voneinander für substituierte oder unsubstituierte lineare oder verzweigte Alkylgruppen mit 1 bis 10 Kohlenstoffatomen oder substituierte oder unsubstituierte Cycloalkyl- oder Arylgruppen stehen.

2. Klebstoffzusammensetzung nach Anspruch 1, wobei es sich bei dem mindestens einen bei 25 °C festen Poly-α-olefin **P** um ein amorphes Poly-α-olefin (APAO) handelt.

3. Klebstoffzusammensetzung nach Anspruch 1 oder 2, wobei das mindestens eine bei 25 °C feste Poly-α-olefin **P** einen nach der Ring-und-Kugel-Methode gemäß der Norm DIN EN 1238 bestimmten Erweichungspunkt im Bereich von 60-200 °C, vorzugsweise 75-180 °C, weiter bevorzugt 85-180 °C, und/oder eine gemäß der Norm DIN 53019 bestimmte Schmelzeviskosität bei 190 °C von nicht mehr als 150.000 MPa·s, vorzugsweise nicht mehr als 135.000 MPa·s, weiter bevorzugt nicht mehr als 125.000 MPa·s, aufweist.

4. Klebstoffzusammensetzung nach einem der vorhergehenden Ansprüche, wobei das mindestens eine bei 25 °C feste Poly-α-olefin **P** 5-85 Gew.-%, vorzugsweise 15-75 Gew.-%, weiter bevorzugt 20-65 Gew.-%, des Gesamtgewichts der Klebstoffzusammensetzung ausmacht.

5. Klebstoffzusammensetzung nach einem der vorhergehenden Ansprüche, wobei die mindestens eine organische phosphorhaltige Verbindung **PH** frei von Stickstoff ist.

6. Klebstoffzusammensetzung nach einem der vorhergehenden Ansprüche, wobei R¹ und R² unabhängig voneinander für eine Methylgruppe, eine Ethylgruppe oder eine Propylgruppe, vorzugsweise Methylgruppen, stehen.

7. Klebstoffzusammensetzung nach einem der vorhergehenden Ansprüche, wobei die mindestens eine organische phosphorhaltige Verbindung **PH** in der Klebstoffzusammensetzung in einer Menge von 1-55 Gew.-%, vorzugsweise 5-50 Gew.-%, weiter bevorzugt 7,5-45 Gew.-%, des Gesamtgewichts der Klebstoffzusammensetzung vorliegt.

8. Klebstoffzusammensetzung nach einem der vorhergehenden Ansprüche, wobei das mindestens eine Klebrigmacherharz **TR** einen nach der Ring-und-Kugel-Methode gemäß der Norm DIN EN 1238 bestimmten Erweichungspunkt im Bereich von 60-180 °C, vorzugsweise 70-160 °C, weiter bevorzugt 75-150 °C, aufweist.

9. Klebstoffzusammensetzung nach einem der vorhergehenden Ansprüche, wobei das mindestens eine Klebrigmacherharz **TR** 1-60 Gew.-%, vorzugsweise 5-50 Gew.-%, weiter bevorzugt 10-45 Gew.-%, des Gesamtgewichts der Klebstoffzusammensetzung ausmacht.

10. Klebstoffzusammensetzung nach einem der vorhergehenden Ansprüche, ferner umfassend mindestens ein thermoplastisches Polymer **TP,** das von dem mindestens einen bei 25 °C festen Poly-α-olefin **P** verschieden ist, umfasst, wobei das mindestens eine thermoplastische Polymer **TP** vorzugsweise aus der Gruppe bestehend aus Propylen-Homopolymeren und Propylen-Copolymeren ausgewählt ist.

11. Klebstoffzusammensetzung nach Anspruch 10, wobei das mindestens eine thermoplastische Polymer **TP** 0,5-25 Gew.-%, vorzugsweise 1-15 Gew.-%, weiter bevorzugt 1,5-10 Gew.-%, des Gesamtgewichts der Klebstoffzusammensetzung ausmacht.

12. Verwendung der Klebstoffzusammensetzung nach einem der vorhergehenden Ansprüche zum Verbinden von Substraten, vorzugsweise zum Verbinden von Kunststoffschaumplatten.

13. Verfahren zur Herstellung eines Verbundelements, wobei das Verfahren folgende Schritte umfasst:
i) Erhitzen der Klebstoffzusammensetzung nach einem der Ansprüche 1-11 zum Bereitstellen einer geschmolzenen Klebstoffzusammensetzung,
ii) Aufbringen der geschmolzenen Klebstoffzusammensetzung auf eine erste Oberfläche eines ersten Substrats **S1** zur Bildung eines Klebstofffilms,
iii) Kontaktieren des Klebstofffilms mit einer ersten Oberfläche eines zweiten Substrats **S2.**

14. Verfahren nach Anspruch 13, wobei es sich bei dem ersten Substrat **S1** und/oder dem zweiten Substrat **S2** um eine Kunststoffschaumplatte, bevorzugt eine Platte aus expandiertem Polystyrolschaum, weiter bevorzugt eine Platte aus extrudiertem expandiertem Polystyrolschaum handelt.

15. Verbundelement, umfassend:
a) ein erstes Substrat **S1,**
b) eine Schicht aus einer Klebstoffzusammensetzung nach einem der Ansprüche 1-11 und
c) ein zweites Substrat S2, wobei die Schicht aus der Klebstoffzusammensetzung zwischen dem ersten Substrat S1 und dem zweiten Substrat S2 angeordnet ist, so dass die Substrate über mindestens einen Teil ihrer gegenüberliegenden Oberflächen über die Schicht aus der Klebstoffzusammensetzung miteinander verklebt sind.
